# EUROPEAN PATENT SPECIFICATION

(11) **EP 4 404 573 B1**
(45) Date of publication and mention of the grant of the patent: **15.07.2026**
(21) Application number: 22880416.7
(22) Date of filing: 14.10.2022
(51) Int. Cl.: H04L 51/52, H04L 51/214, H04L 51/212, H04L 51/043, H04N 21/235, G06Q 50/00, H04L 51/216, H04L 51/04, H04N 21/431

(54) **COMMENT SHARING METHOD AND APPARATUS, AND ELECTRONIC DEVICE**
VERFAHREN UND VORRICHTUNG ZUR GEMEINSAMEN KOMMENTARNUTZUNG UND ELEKTRONISCHE VORRICHTUNG
PROCÉDÉ ET APPAREIL DE PARTAGE DE COMMENTAIRE ET DISPOSITIF ÉLECTRONIQUE

(30) Priority: 15.10.2021 CN 202111204212
(43) Date of publication of application: 24.07.2024
(73) Proprietor: BEIJING BYTEDANCE NETWORK TECHNOLOGY CO., LTD., Beijing 100041 (CN)
(72) Inventor: RUZIC, Erica Lynne, Beijing 100086 (CN); DUAN, Yi, Beijing 100086 (CN)
(74) Representative: Marks & Clerk LLP
(86) International application number: PCT/CN2022/125373
(87) International publication number: WO 2023/061480

(56) References cited:
- CN-A- 105 912 610
- CN-A- 107 820 131
- CN-A- 109 003 194
- CN-A- 109 947 981
- CN-A- 111 670 437
- CN-A- 113 949 901
- US-A1- 2010 121 912
- US-A1- 2014 351 716
- US-A1- 2020 213 326

## Description

### FIELD OF THE INVENTION

The embodiments in the present application relate to the technical field of computers, in particular to a comment sharing method, apparatus and electronic device.

### BACKGROUND

More and more users record and share their lives by recording short videos, and short videos have become the important way for users to acquire information. When a user watches short videos shared by other users on the user's mobile phone, the user can "like" the short videos and make comments in a comment area of the short videos.

The comments in the comment area are diverse and rich. At present, users can share good videos with other users, but when the users see wonderful comments in the comment area, they can't share the comments with other users, therefore, the shareable contents are monotonous.

US 2020/213326A1 provides a social media and video sharing platform for children and parents. A private video sharing system enables children to send and receive videos, comment on videos, and add friends who interact with the videos. The social media platform disclosed herein provides parental controls to enable a parent account associated with a child account to control settings (e.g., privacy settings) of the child's account and oversee the child's activities.

### DISCLOSURE OF THE INVENTION

The invention describes a comment sharing method according the independent claim 1, and corresponding electronic device , computer-readable storage medium and computer program product according to claims 11, 12 and 13, respectively.

Additional aspects of the invention are to be found in the dependent claims.

### DESCRIPTION OF THE DRAWINGS

In order to more clearly explain the embodiments of this disclosure or the technical solutions in the prior art, the following will briefly introduce the drawings that need to be used in the description of the embodiments or the prior art. Obviously, the drawings in the following description are some embodiments of the present disclosure, and for those ordinary skilled in the field, other drawings can be obtained according to these drawings without paying creative effort.
Fig. 1 is a schematic diagram of an existing interface in an electronic device;
Fig. 2A to 2E are flow diagrams of a comment sharing method according to an embodiment of the present disclosure;
Fig. 3 is a schematic diagram of an interface of an electronic device applicable to an embodiment of the present disclosure;
Fig. 4 is a schematic diagram of another interface of an electronic device applicable to an embodiment of the present disclosure;
Fig. 5 is a schematic diagram of another interface of an electronic device applicable to an embodiment of the present disclosure;
Fig. 6 is a schematic diagram of another interface of an electronic device applicable to an embodiment of the present disclosure;
Fig. 7 is a schematic diagram of another interface of an electronic device applicable to an embodiment of the present disclosure;
Fig. 8 is a structural block diagram of a comment sharing apparatus according to an embodiment of the present disclosure;
Fig. 9 is a structural diagram of an electronic device according to an embodiment of the present disclosure.

### DETAILED DESCRIPTION OF PREFERRED EMBODIMENTS

In order to make the objects, technical solutions, and advantages of the embodiments of the present disclosure to be clearer, the technical solutions in the embodiments of the present disclosure will be clearly and completely described below with reference to the drawings in the embodiments of the present disclosure. Obviously, the described embodiments are only a part of embodiments of the present disclosure, not all of them. All other embodiments obtained by those ordinary skilled in this field based on the embodiments in the present disclosure without creative work are within the protection scope of the present disclosure.

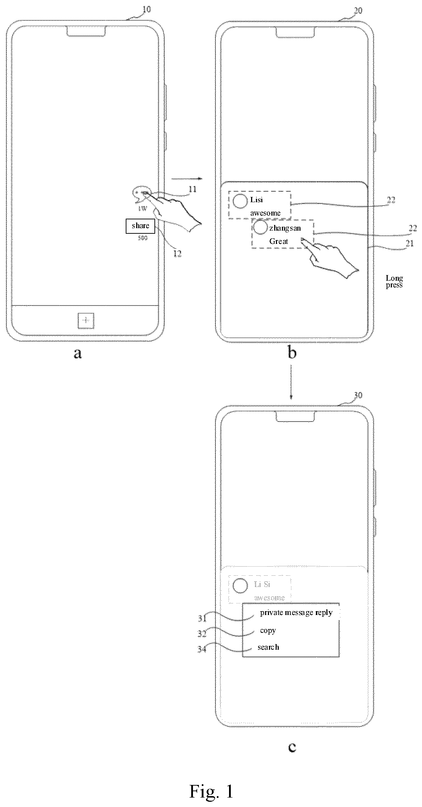

Fig. 1 is a schematic diagram of an existing interface in an electronic device. In Fig. 1, a short video application is taken as an example. In Fig. 1, **a** indicates an interface 10 of the electronic device to play a short video. The interface 10 includes a comment control 11 thereon. It should be understood that **a** in Fig. 1 does not show the pictures of the short video. When a user clicks on the comment control 11, the electronic device can display a comment interface 20, as shown in **b** of Fig. 1, the comment interface 20 includes a comment area 21, which includes at least one user's comment 22 on the short video. When the user long-presses the comment 22, the electronic device can display an operation interface 30 for the comment, as shown in **c** in Fig. 1, the operation interface 30 includes a private message reply control 31, a copy control 32 and a search control 34.

Referring to **a** in Fig. 1, the interface 10 can also include a short video sharing control 12, and users can share short videos with other users by clicking the short video sharing control 12. In the prior art, when the users see good short videos, users can share the good short video with other users, but if users see wonderful comments in the comment area for the short video, they can only copy the comments or reply to the comments by private messages, but can't share the comments with other users (such as friends of the short video). At present, the shareable contents are monotonous, and the user experience is low.

In view of the problems in the prior art, an embodiment of the present disclosure provides a comment sharing method. An electronic device can share comments to users who require to share based on user's operations, so that users can not only share short videos, but also share comments, thus enriching the shareable contents and improving the user experience.

In one embodiment, the electronic device can be a wireless terminal or a wired terminal. A wireless terminal may refer to a handheld device with wireless connection function, or any other processing device connected to a wireless modem. The wireless terminal can communicate with one or more core network devices via Radio Access Network (RAN). The wireless terminal can be a mobile terminal, such as a mobile phone (or "cellular" phone) and a computer with mobile terminals, for example, any portable, pocket-sized, handheld, computer built-in or vehicle-mounted mobile devices, which can exchange language and/or data with the radio access network. For example, the wireless terminal can also be Personal Communication Service (PCS) phone, cordless phone, Session Initiation Protocol (SIP) phone, Wireless Local Loop (WLL) station, Personal Digital Assistant (PDA) and other devices. A wireless terminal can also be referred to as system, Subscriber Unit, Subscriber Station, Mobile Station, Mobile, Remote Station, Remote Terminal, Access Terminal, User Terminal, User Agent, User Device or User Equipment, and is not limited here. Optionally, the above-mentioned terminals can also be smart watches, tablet computers, wearable devices, etc. In the embodiments of the present disclosure, the electronic devices are not limited, and the following embodiments and drawings illustrate the electronic device by taking the mobile phone as an example.

It should be noted that in the above-mentioned Figure 1, the comment sharing for short video was taken as an example, the comment method according to the embodiments of this disclosure is not limited to the scene of comment sharing for short video, but also can be applied to the scene of comment sharing for other multimedia resources, such as video comment sharing, audio comment sharing, image comment sharing, and line comment sharing. The comment method according to the embodiments of the present disclosure is not limited to short video applications, but also can be applied to video applications, audio applications, navigation applications, social applications, etc., which are not limited by the embodiments of the present disclosure.

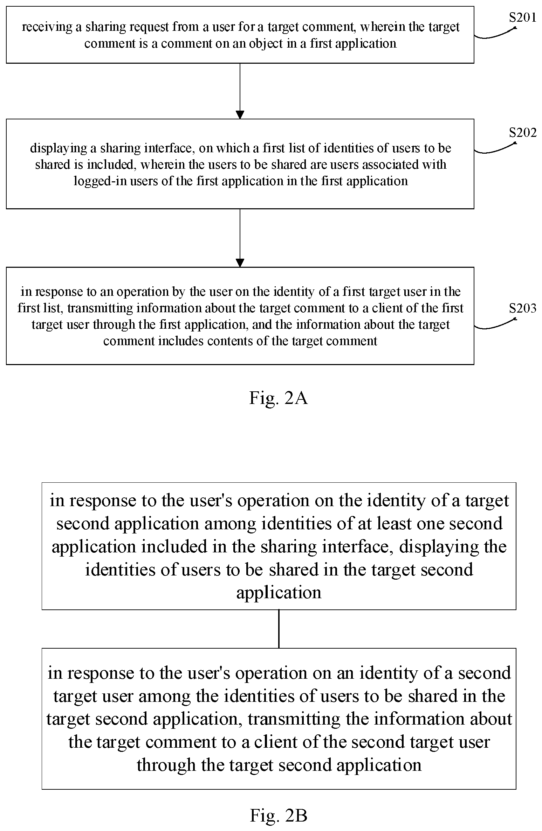

Fig. 2A is a flowchart of a comment sharing method according to an embodiment of the present disclosure. Referring to Fig. 2A, the comment sharing method according to an embodiment of the present disclosure may include:
Step S201, receiving a sharing request from a user for a target comment, wherein the target comment is a comment on an object in a first application.

The first application may include, but are not limited to, short video application, video application, audio application, navigation application, and social application. when the first application is different, the object in the first application is different.

Illustratively, when the first application is a short video application, the object in the first application is a short video. When the first application is a social application, the object in the first application can be multimedia resources published by users, such as texts, documents, images, videos, etc. When the first application is a navigation application, the object in the first application can be destination or planned route, etc. The following description takes the first application as a short video application and the object as a short video as an example.

The object comment may be a comment on the object in the first application. In one embodiment, the comment on the object in the first application exists in the comment area for the object in the first application, and in this embodiment, the user can operate the interface of the first application displayed by the electronic device, trigger the electronic device to display the comment area for the object in the first application, and the comment area includes at least one user's comment on the object. Comments may include but are not limited to, texts, images, videos, emoticons, etc. The manner of the user operating the interface of the first application displayed by the electronic device may be, but not be limited to, long press, triple tap, etc.

In an embodiment, when an electronic device displays an object, such as a short video, the user can long-press the interface of the short video, trigger the electronic device to display the comment area for the object in the first application, and in turn, the user can select the target comment in the comment area.

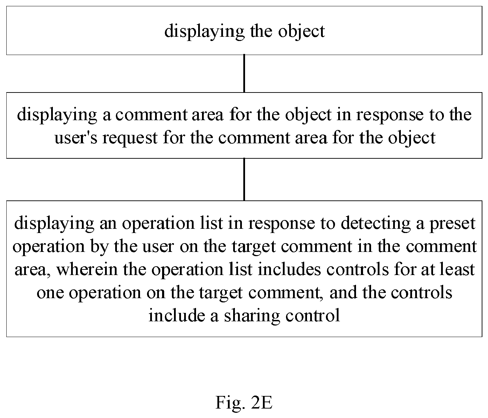

In an embodiment, in order to adapt to the user's habits, a few modifications are made to an existing interface in the embodiment of the present disclosure. A process before receiving the sharing request from the user for the target comment will be described with reference to Fig. 2E. It shall be noted that such process is not necessary, and particularly, such process can be included in the method according to the embodiment of the present disclosure, and can be executed outside the method according to the embodiment of the present disclosure, and even if such process is not executed, the scheme of the present disclosure is still complete and can achieve advantageous effects.

For example, before the above step S201, the electronic device can also display an object in the first application, and the electronic device displays a comment area for the object in response to the user's request for the comment area for the object. For example, if a comment control is displayed on the interface of the electronic device displaying the object in the first application, the user can operate the comment control to request the electronic device to display the comment area for the object. The electronic device can display the comment area for the object in response to detecting that the user operates the comment control.

After displaying the comment area for the object, the electronic device displays an operation list in response to detecting preset operations by the user on the target comment in the comment area. Among them, the preset operations can include, but is not limited to, long press, triple tap, etc., and the following embodiments will take the long press as an example. That is, the electronic device can display the operation list in response to detecting the user's long-press operation on the target comment. The operation list includes at least one operation control for the target comment, and the at least one operation control includes a sharing control. For example, the user operating the sharing control can input a sharing request for the target comment into the electronic device, and correspondingly, the electronic device can receive the user's sharing request for the target comment.

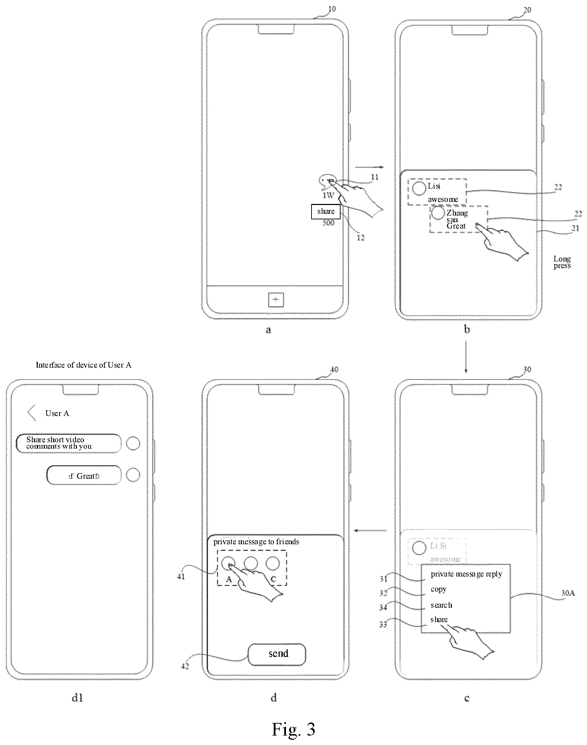

Taking the first application being a short video application as an example, the following describes the process that the user triggers the electronic device to receive the sharing request for the target comment:
**a** in Fig. 3 shows an interface 10 for playing a short video by an electronic device, and the interface 10 includes a comment control 11. The user clicks the comment control 11. Correspondingly, the electronic device detects that the user clicks the comment control 11, that is, detects the user's request for the comment area for the object, and the electronic device can display the comment area for the object. As shown in b in Fig. 3, the electronic device can display a comment interface 20, which includes a comment area 21, and the comment area 21 includes at least one user's comment 22 on the short video.

For example, if the user's preset operation on the target comment in the comment area is a long press operation, when the user long presses the comment 22, the electronic device can display the operation list 30A in response to detecting the user's preset operation on the target comment in the comment area (long press operation). For example, the target comment is "Great".

As shown in **c** in Fig. 3, compared with the above-mentioned operation interface 30, the operation list 30A may include a sharing control 33. When the user clicks on the sharing control 33, the electronic device can be triggered to receive the user's sharing request for the target comment (such as comment 22) for the short video. It should be understood that in **c** of Fig. 3, the operation list 30A also includes a private message reply control 31, a copy control 32, and a search control 34 as an example, and the operation list 30A may also include other types of controls, which are not described in detail in the embodiments of the present disclosure, and can refer to the interface after long pressing the comment in existing applications.

In one embodiment, the user can click on other locations on the electronic device other than the operation list 30A, to trigger the electronic device to display the comment interface 20 without displaying the operation list 30A. Alternatively, in one embodiment, the operation list 30A may further include a cancel control, and the user clicking the cancel control may trigger the electronic device to display the comment interface 20 without displaying the operation list 30A. It should be understood that in **c** of Fig. 3, "the user can click on other locations on the electronic device than the operation list 30A to trigger the electronic device to display the comment interface 20" is taken as an example.

Step S202, displaying a sharing interface, on which a first list of identities of users to be shared is included, wherein the users to be shared are users associated with logged-in users of the first application in the first application.

The electronic device can display a sharing interface in response to receiving the user's sharing request for the target comment. The sharing interface includes a first list of identities of users to be shared, and the first list includes the identity of at least one user to be shared.

Among them, the users to be shared are the users associated with logged-in users of the first application in the first application. Specifically, the users to be shared are the users associated with the logged-in users of the first application on the electronic device in the first application. The logged-in user of the first application can be a user who requests the sharing of the target comment, or can be a user who does not request the sharing of the target comment, such as a user who requests the sharing of the target comment shares the target comment with someone else's electronic device.

For example, if a user **A** logs in the short video application with his/her own account on his/her own electronic device, the logged-in user of the first application is the user **A.** If a user **B** watches the short video using user **A**'s electronic device, and the user who logs in the short video application on user A's electronic device is a user A, then the logged-in user of the first application is the user **A.**

The users associated with the logged-in users of the first application in the first application can be users who are concerned by the logged-in users of the first application in the first application, or users who pay attention to each other with the logged-in users of the first application in the first application (or become friends with each other). For example, if the logged-in user of the first application on the electronic device is user **A,** the user associated with user **A** may be the user concerned by user **A** or the user who pay attention to each other with user A. The following description will take the user associated with the logged-in user of the first application in the first application being the user concerned by the logged-in user of the first application in the first application as an example.

The identity of the user to be shared may include, but not be limited to, the information used to distinguish the user to be shared, such as avatar and nickname of the user to be shared, and so on.

For example, as shown in c in Fig. 3 above, when the user clicks on the sharing control 33, the electronic device can display the sharing interface 40. Referring to **d** in Fig. 3, the sharing interface 40 may include a first list 41 of the identities of users to be shared, in which the identities of at least one user to be shared are included, and the identities of users to be shared are characterized by their avatars and nicknames in **d** in Fig. 3. A, B and C in **d** in Fig. 3 represent nicknames of users to be shared, and the avatars of users to be shared are represented by circles.

S203, in response to an operation by the user on the identity of a first target user in the first list, transmitting information about the target comment to a client of the first target user through the first application, and the information about the target comment includes contents of the target comment.

In one embodiment, the first list may include all users associated with the logged-in user of the first application in the first application. The user can select the identity of the first target user in the first list who needs to share the target comment. Correspondingly, the electronic device can transmit the target comment to the first target user in response to the user's operation on the identity of the first target user in the first list.

Because the user to be shared is the user associated with the logged-in user of the first application on the electronic device in the first application, the logged-in user can share the target comment with the user to be shared in the first application by the way of private message. Among them, the process that the logged-in user communicates with the user to be shared in the first application by way of private message can be as follows:
The electronic device transmits information about the target comment to the client of the first target user through the first application. Specifically, the electronic device can transmit the information about the target comment to an electronic device, i.e., a client, by which the first target user logs in the first application, through a server corresponding to the first application. Among them, the electronic device can transmit the information about the target comment and the identity of the first target user to a server corresponding to the first application, and then the server corresponding to the first application can transmit the information about the target comment to the electronic device by which the first target user logs in the first application. For example, if the first target user is a user **A** to be shared, then the first target user logs in the electronic device of the first application, that is, the electronic device by which the user **A** to be shared logs in the first application, such as the mobile phone of the user to be shared.

In one embodiment, the information about the target comment may include the content of the target comment, such as "Great".

In an embodiment, referring to the sharing interface 40 shown by **d** in Fig. 3, the sharing interface 40 may further include a transmitting control 42, after selecting a first target user in the first list, the user can click the transmitting control 42 to trigger the electronic device to transmit the information about the target comment to the electronic device, by which the first target user logs in the first application, through the server corresponding to the first application.

Referring to **d** in Fig. 3, the user can select a user **A** to be shared as the first target user. In an embodiment, after the user can select the user **A** to be shared as the first target user, the avatar of the user **A** to be shared can turn black, or a "check mark" can be displayed on the avatar of the user **A** to be shared, to represent that the user **A** to be shared has been selected. The changes of the avatar and nickname of the user **A** to be shared after the user **A** to be shared has been selected are not limited in the embodiments of the present disclosure.

Among them, after the user selects the user **A** to be shared as the first target user and clicks the transmitting control 42, the electronic device can transmit the information about the target comment to the electronic device, by which the user **A** to be shared logs in the short video application, through the short video server. **d1** in Fig. 3 is the interface of the electronic device (referred to as the device for short) by which the user **A** to be shared logs in the short video application. After the device receives the information about the target comment from the electronic device, the user **A** to be shared can see the information about the target comment in a private message dialog box with the logged-in user in the short video application. Illustratively, **d1** in Fig. 3 is an interface diagram of a private message dialog box between the user **A** to be shared and the logged-in user, and **d1** in Fig. 3 displays the message from the logged-in user containing the content of the target comment "Great".

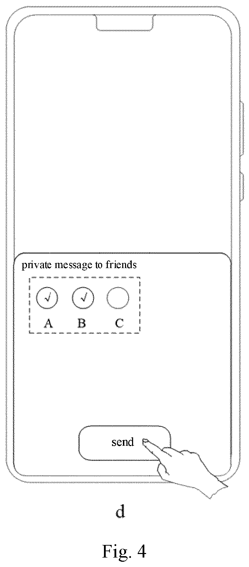

In one embodiment, the first target user is at least one user. In the above-mentioned **d** in Figure 3, the user selects one first target user as an example to explain, and there may be a plurality of first target users. Illustratively, in Fig. 4, two first target users are taken as an example for illustration. In this case, **d** in Fig. 3 can be replaced by Fig. 4, and users can select two users to be shared as the first target users. In Fig. 4, two users to be shared have been selected as the first target users with checkmarks displayed on their avatars as an example. Exemplary, the user **A** to be shared and user **B** to be shared are the first target users.

The comment sharing method according to embodiments of the present disclosure includes: receiving a sharing request from a user for a target comment, displaying a sharing interface, on which a first list of identities of users to be shared is included, in response to an operation by the user on the identity of a first target user in the first list, transmitting information about the target comment to a client of the first target user through the first application. In the embodiments of the present disclosure, the electronic device can provide the user with the function of sharing comments in the first application, and the user can select the target comments to share with the users who require to share in the first application, thus enriching the sharing content and improving the user experience.

The sharing interface 40 will be further described below. In one embodiment, in addition to the first list 41, the sharing interface 40 can include at least one of the following items: the identity 50 of at least one second application to be shared, the search control 60, and the input box 70. In one embodiment, the sharing interface 40 may also include the content 80 of the target comment.

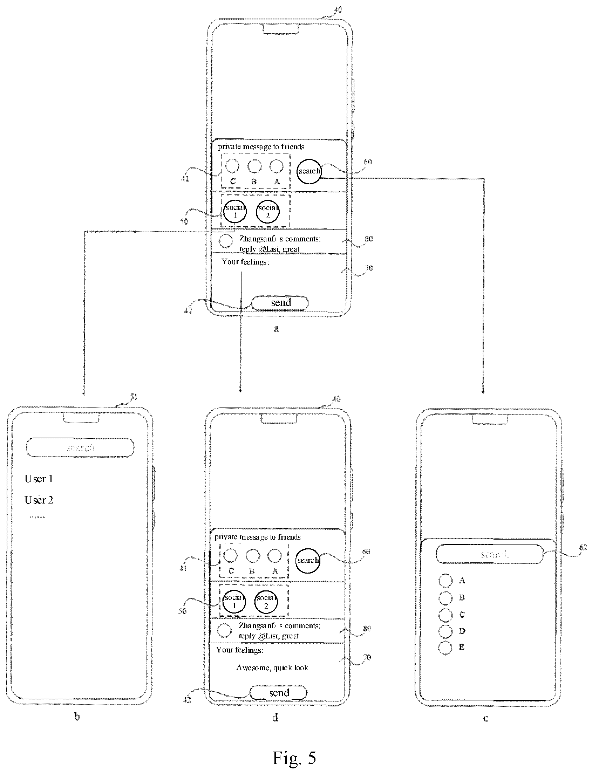

In this embodiment, the above-mentioned **d** in Fig. 3 can be replaced by a in Fig. 5. **a** in Fig. 5 takes the sharing interface 40, which includes the identity 50 of at least one second application to be shared, the search control 60, the input box 70 and the content 80 of the target comment, as an example. In conjunction with Fig. 5, the identity 50 of at least one second application to be shared, the search control 60, the input box 70 and the content 80 of the target comment are respectively described below.

Referring to **a** in Fig. 5, the sharing interface 40 may include a first list 41, the identity 50 of at least one second application to be shared, the search control 60, the input box 70 and the content 80 of the target comment.

First, the identity 50 of at least one second application to be shared.

The second application can be different from the first application, the second application can be, but not limited to, a social application. In the following embodiments, the first application being a short video application and the second application being a social application are taken as an example.

In the embodiment shown in Fig. 2A, the electronic device can share the target comments of the objects in the first application to the associated users in the first application by private message. In the embodiment of the present disclosure, the electronic device can also share the target comments of the objects in the first application to users in other applications, which can enrich the sharing manners. In this embodiment, referring to **a** in Fig. 5, the sharing interface 40 may include the identity 50 of at least one second application to be shared, and in **a** in Fig. 5, the at least one second application is characterized by social application 1 and social application 2.

The process of sharing comments with users in the second applications will be described with reference to Fig. 2B. In this embodiment, as shown in Fig. 2B, in response to the user's operation on an identity of a target second application among the identity of at least one second application, the electronic device can display the identity of the user to be shared in the target second application. Among them, the users to be shared in the target second application are users associated with logged-in users of the target second application in the target second application. Specifically, the users to be shared in the target second application are users associated with logged-in users of the target second application in the target second application on an electronic device. For example, users who pay attention to each other withthe logged-in users of the target second application in the target second application (or become friends with each other) on the electronic device, or users who are concerned by the logged-in users of the target second application in the target second application on the electronic device.

For example, if the target second application is social application 1, then the users to be shared in the target second application are users who become friends with each other with the logged-in users of social application 1 in social application 1 on the electronic device, or users who are concerned by the logged-in users of social application 1 in social application 1 on the electronic device.

The user can select a second target user from the identities of users to be shared in the target second application, so as to trigger the electronic device to share the target comments with the second target user. Among them, in response to the user's operation on the identity of the second target user in the identities of users to be shared in the target second application, the electronic device can transmit information about the target comment to the client of the second target user through the target second application. Specifically, the electronic device can transmit the information about the target comment to an electronic device by which the second target user logs in the target second application through the server corresponding to the target second application.

Specifically, the electronic device can transmit the information about target comment information and the identity of the second target user to the server corresponding to the target second application, and then the server corresponding to the target second application can transmit the information about the target comment to the electronic device by which the second target user logs in the target second application.

Referring to **a** in Fig. 5, the user clicks on the identity of social application 1, and in response to the user clicking on the identity of social application 1, the electronic device can display the interface 51 of the identity of the user to be shared in social application 1. Referring to **b** in Fig. 5, the interface 51 may include the identities of at least one user to be shared in the social application 1, such as user 1 and user 2. The user can select the identity of a second target user (such as User 1) from the identities of multiple users to be shared displayed on the interface 51, and can trigger the electronic device to transmit the information about target comments to the second target user.

Second, search control 60.

The above-mentioned **d** in Fig. 3 takes the first list 41, which can display all the identities of users to be shared, as an example for illustration. In one embodiment, in order to facilitate the user to quickly select the first target user, the electronic device can preferentially display identities of some users to be shared in the first list that are closely associated with the logged-in users of the first application on the electronic device, so that users can quickly share the information about target comments to the closely associated users. For example, the electronic device can obtain the information about all users associated with the logged-in users of the first application on the electronic device, and according to the information about all users, determine the users to be shared displayed in the first list and their display order.

In an embodiment, the information about all users associated with the logged-in user of the first application on the electronic device may include: the number of interactions or the time of the last interaction between the logged-in user of the first application on the electronic device and the user to be shared. The electronic device can determine the users to be shared displayed in the first list and their display order according to the number of interactions or the time of the last interaction between the logged-in user of the first application on the electronic device and the users to be shared.

For example, taking the number of interactions between the logged-in user of the first application on the electronic device and the user to be shared as an example, the electronic device can arrange the identities of top three users to be shared in the order of the number of interactions between the users to be shared and the logged-in users of the first application on the electronic device, as the users to be shared displayed in the first list, and display the users to be shared according to the order of the number of interactions from the high to the low.

As shown in **a** in Fig. 5, the top three users to be shared in the order of the number of interactions between the users to be shared and the logged-in users of the first application on the electronic device are: user **A** to be shared, user **B** to be shared and user **C** to be shared, and in the order of the numbers of the interactions between the logged-in users of the first application on the electronic device and users to be shared from high to low are user **C** to be shared, user **B** to be shared and user **A** to be shared respectively, then the electronic device display user **A** to be shared, user **B** to be shared and user **C** to be shared in the order of " user **C** to be shared, user **B** to be shared and user **A** to be shared". In this embodiment, the interaction number in top three is an example.

For example, taking the time of last interaction between the logged-in user of the first application on the electronic device and the user to be shared as an example, the electronic device can take the top three users to be shared with the latest last interaction time as the users to be shared displayed in the first list, and display the users to be shared in the order of the last interaction time from far to near. If the top three users to be shared with the latest last interaction time between the logged-in user and the users to be shared: user **A** to be shared, user **B** to be shared and user **C** to be shared, and in the order of last interaction time between the logged-in user and the users to be shared from far to near is user **C** to be shared, user **B** to be shared and user **A** to be shared, the electronic device can display user **A** to be shared, user **B** to be shared and user **C** to be shared in the first list according to the order of " user **C** to be shared, user **B** to be shared and user **A** to be shared". In this embodiment, the top three users to be shared with the latest last interaction time are taken as examples.

In view that the identities of some users associated with the logged-in users of the first application on the electronic device are displayed in the first list, if the first list does not contain the identities of users who require sharing of the target comments, in order to facilitate the user to find more users to be shared, a search control 60 is provided on the sharing interface 40 in this embodiment of the present disclosure.

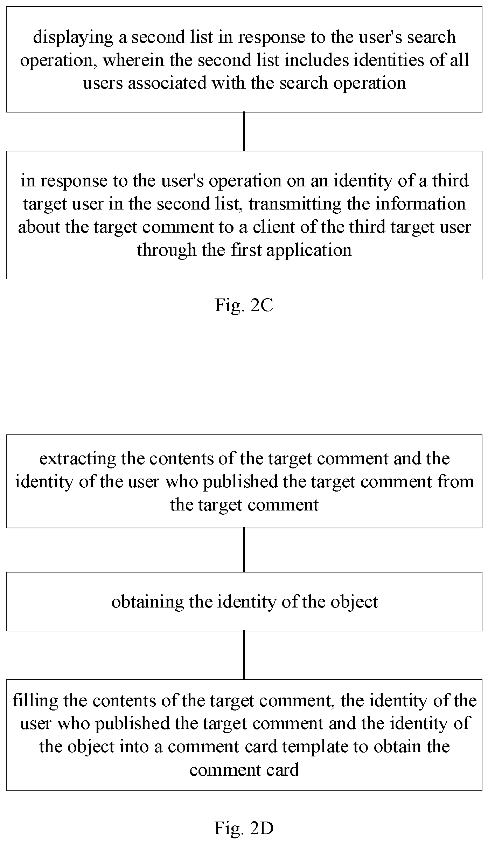

The processes in response to the search operation will be described with reference to Fig. 2C. In this embodiment, users can click the search control 60 to find more users to be shared. Accordingly, in response to the user's operation on the search control 60, the electronic device can display the second list 61 of identities of the users to be shared. In an embodiment, the sharing interface 40 may not include the search control 60, and the user may perform a preset action to trigger the electronic device to display the second list 61 of identities of the users to be shared. Illustratively, the preset action can be: shake the electronic device, or draw a circle in the air with the electronic device in hand, etc. Among them, in response to the user's operation on the search control 60 or in response that the user performs the preset action, the electronic device can determine detection of the user's search operation, and then the second list 61 is displayed.

The second list 61 includes: identities of all users associated with the logged-in user of the first application in the first application on the electronic device, in other words, the second list 61 includes the identities of all users associated with the search operation.

As shown in **c** in Fig. 5, for example, in addition to the identity of user **A** to be shared, the identity of user **B** to be shared and the identity of user **C** to be shared, it also includes the identity of user **D** to be shared and the identity of user **E** to be shared. Among them, the identity of each user to be shared corresponds to a sharing control, and the user can trigger the electronic device to transmit the information about the target comment to the user to be shared by operating the sharing control corresponding to the user to be shared.

In an embodiment, because of the large number of users to be shared, in order to facilitate the user to quickly find a first target user, the interface shown in **c** in Fig. 5 may further include a search box 62, in which users can input nicknames of users to be shared to find the users to be shared.

In this embodiment, in response to the user's operation on the identity of a third target user in the second list, the electronic device can transmit the information about the target comment to the client of the third target user through the first application. Specifically, the electronic device can transmit the information about the target comment to an electronic device, by which the third target user logs in the first application, through the server corresponding to the first application. For example, if the user operates on the identity of the user **D** to be shared in the second list, the electronic device can transmit the information about the target comment to the electronic device by which the user **D** to be shared logs in the short video application through the server corresponding to the short video application.

Third, the contents of target comment.

In an embodiment, in order to make the user to clarify the target comment selected by the user, referring to **a** in Figure 5, the contents 80 of the target comment can be included on the sharing interface 40, such as "Great". In one embodiment, the sharing interface 40 may include identity of a user who published the target comment and identity of a user to which a comment replied by the target comment belongs.

Among them, the comments replied by the target comment refer to comments made by other users in the first application on the objects in the first application, and the target comments are comments that reply to the comments made by other users. Illustratively, referring to **b** in Figure 1, if Li Si's comment on the short video is "Awesome", Zhang San's reply to Li Si's comment is "Great" and the target comment selected by the user is "Great", then the user to which the comment replied by the target comment belongs refers to Li Si. It should be understood that the avatars of Li Si and Zhang San are represented by circles in **b** in Fig. 1. Referring to **a** in Fig. 5, a text message "Zhang San's comments: reply @ Li Si, great" is displayed on the sharing interface 40. Among them, Zhang San is the identity of the user who published the target comment, Li Si is the identity of the user to which the comment replied by the target comment belongs, and "Great" is the content of the target comment.

In this embodiment, before sharing the target comments, the user can determine his/her own selected target comment so as to timely determine whether the target comment is correct, which is convenient for the user to modify the target comment in time.

Fourth, input box 70.

In an embodiment, when sharing the target comments with other users to be shared, users can add their own ideas to enrich the contents shared by electronic device. In this embodiment, referring to **a** in Fig. 5, the sharing interface 40 can further include an input box 70. Users can input the information they want to input in the input box 70. Referring to **d** in Fig. 5, the user can input the texts "awesome, quick look" in the input box 70.

In this way, based on the above descriptions in "First" to "Fourth", the information about the target comment transmitted by the electronic device to the first target user or the second target user can include not only the content of the target comment, but also at least one of the following: the identity of the user who published the target comment, the identity of the object, and the identity of the user to which the comment replied by the target comment belongs.

In an embodiment, the information about the target comment can be a comment card, that is, the electronic device can transmit the target comment to the client of the first target user (or the second target user or the third target user) in the form of a comment card. Among them, the electronic device stores a comment card template, which defines content in the comment card and location of the content in advance.

Illustratively, in one embodiment, the comment card includes the content of the target comment, the identity of the user who published the target comment, and the identity of the object. In this embodiment, before transmitting the information about the target comment to the client of the first target user (or the second target user or the third target user), the electronic device needs to generate the comment card. Among them, the electronic device can extract the content of the target comment and the identity of the user who published the target comment from the target comment. The electronic device acquires the identity of the object, and fills the content of the target comment, the identity of the user who published the target comment, and the identity of the object into the comment card template to obtain the comment card, as shown in Fig. 2D.

Among them, because the target comment is structural, that is to say, the format of the target comment is fixed, for example, the first row of the target comment is " the identity of the user who published the target comment" and the second row of the target comment is " the content of the target comment". In the embodiments of the present disclosure, the electronic device can extract the content of the target comment, the identity of the user who published the target comment from the target comment based on the format of the target comment.

In an embodiment, the identity of the object can be, but not limited to, the name, title, image, etc. of the object. In one embodiment, the first application is a short video application, the object is a short video, and the identity of the object is the cover of the short video.

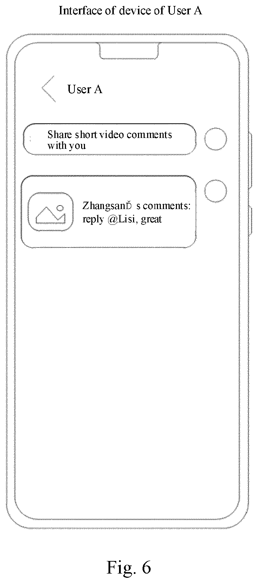

For example, when the first target user receives the comment card of the target comment from the logged-in user of the first application on the electronic device, the comment card can be displayed. In Fig. 6, as an example, the comment card includes the content of the target comment "Great", the identity of the user who published the target comment "Zhang San", the identity of the object "the cover of the short video" and the identity of the user to which the comment replied by the target comment belongs "Li Si". It can be understood that **d1** in Figure 3 can be replaced by Fig. 6.

In an embodiment, when the content of the target comment is video or audio, the comment card may not display video or audio, but instead use "video" to represent video and "music" to represent audio, so as to indicate to the first target user that the target comment is video or audio.

In an embodiment, when the content of the target comment is video, the content of the target comment included in the comment card can be the cover of the video.

In the embodiments of the present disclosure, users can not only share the content of the target comment with other users, but also share other information about the target comment with other users, which can further enrich the shared content. In addition, users can not only share the information about target comment with other users in the same application, but also share the information about target comment with other users in other different applications, which can enrich the sharing manner and improve the user experience. In addition, users can also add their own ideas and opinions when sharing the content of target comments with other users, which can further enrich the shared content.

In the above embodiments, the content carried in the information about the target comment is preset. In one embodiment, the user can customize the content carried in the information about the target comment, further enrich the shared content and improve the user experience.

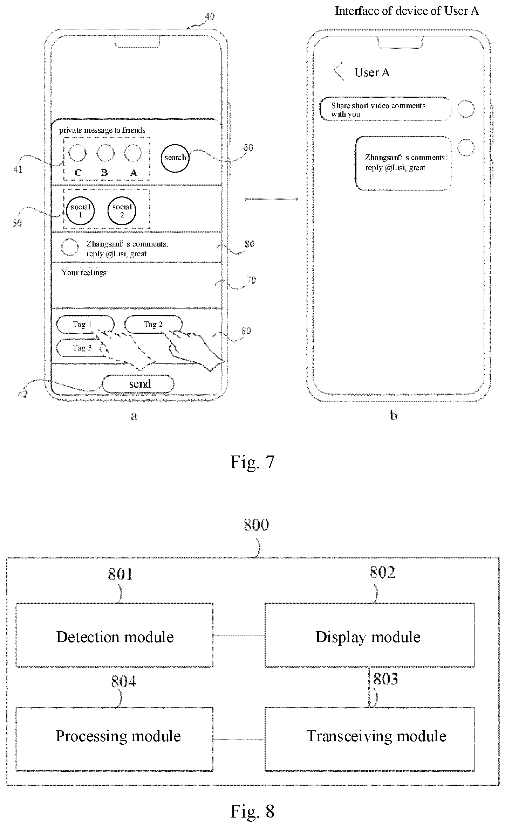

In this embodiment, **a** in Fig. 5 can be replaced by a in Fig. 7. Referring to **a** in Fig. 7, the sharing interface 40 in the embodiments of the present disclosure may further include a custom tag 80. The custom tag 80 includes at least one of the following: a tag of the identity of the user who published the target comment, a tag of the identity of the object, and a tag of the identity of the user to which the comment replied by the target comment belongs.

In **a** in Fig. 7, the tag of the identity of the user who published the target comment, the tag of the identity of the object, and the tag of the identity of the user to which the comment replied by the target comment belongs are represented by tag 1, tag 2 and tag 3, respectively. The user can select tags on the sharing interface, and then customize the content carried in the information about the target comment. That is to say, when the user selects a tag on the sharing interface, the electronic device can, in response to the tag selected by the user, carry the content corresponding to the tag selected by the user in the information about the target comment.

Among them, the electronic device can determine the content in the information about the target comment in response to the user's operation on the custom tag, and then obtain the information about the target comment based on the content in the information about the target comment. For example, if the user selects tag 1 and tag 3 in **a** of Fig. 7, then the electronic device can determine to add the identity of the user who published the target comment corresponding to tag 1 and the identity of the user to which the comment replied by the target comment belongs corresponding to tag 3 into the information about the target comment.

Accordingly, **d1** in Figure 3 above can be replaced by **b** in Fig. 7. The information about the target comment received by the first target user includes: the content of the target comment "Great", the identity of the user who published the target comment "Zhang San", and the identity of the user to which the comment replied by the target comment belongs "Li Si".

In the embodiments of the present disclosure, when a user shares information about the target comment with other users, the user can customize the contents of the information about the target comment, so that the information about the target comment shared by the user can be more in line with user's preferences, and the user experience can be improved.

Referring to Fig. 8, Fig. 8 is a structural block diagram of a comment sharing apparatus provided by an embodiment of this disclosure. For convenience of explanation, only parts related to the embodiments of the present disclosure are shown, and the comment sharing apparatus can be the electronic device in the above embodiment or a chip in the electronic device. Referring to Fig. 8, the comment sharing apparatus 800 includes a detection module 801, a display module 802, a transceiving module 803, and a processing module 804. Among them,
the detection module 801 is configured to receive a sharing request from a user for a target comment, wherein the target comment is a comment on an object in a first application.
the displaying module 802 is configured to display a sharing interface, on which a first list of identities of users to be shared is included, wherein the users to be shared are users associated with logged-in users of the first application in the first application.
the transceiving module 803 is configured to, in response to an operation by the user on the identity of a first target user in the first list, transmit information about the target comment to a client of the first target user through the first application, and the information about the target comment includes contents of the target comment.

According to one or more embodiments, the processing module 804 is configured to determine the users to be shared displayed in the first list and their display order according to the number of interactions or the time of last interaction between the logged-in user and the users to be shared; or determine the users to be shared displayed in the first list and their display order according to the attributes of the users to be shared.

According to one or more embodiments, the first target user is at least one user.

According to one or more embodiments, the sharing interface also includes identity of at least one second application to be shared.

According to one or more embodiments, the display module 802 is further configured to, in response to the user's operation on the identity of a target second application among the identities of at least one second application, display the identities of users to be shared in the target second application, wherein the users to be shared in the target second application are users associated with logged-in users of the target second application in the target second application.

The transceiving module 803 is further configured to, in response to the user's operation on an identity of a second target user among the identities of users to be shared in the target second application, transmit the information about the target comment to a client of the second target user through the target second application.

According to one or more embodiments, the display module 802 is further configured to display a second list in response to the user's search operation, wherein the second list includes identities of all users associated with the search operation.

The transceiving module 803 is further configured to, in response to the user's operation on an identity of a third target user in the second list, transmit the information about the target comment to a client of the third target user through the first application.

According to one or more embodiments, the information about the target comment further includes at least one of the following: identity of a user who published the target comment, identity of the object, and identity of a user to which a comment replied by the target comment belongs to.

According to one or more embodiments, the information about the target comment is a comment card.

According to one or more embodiments, the processing module 804 is further configured to generate the comment card.

According to one or more embodiments, the comment card includes contents of the target comment, the identity of the user who published the target comment, and the identity of the object.

According to one or more embodiments, the processing module 804 is specifically configured to extract the contents of the target comment and the identity of the user who published the target comment from the target comment, obtain the identity of the object, and fill the contents of the target comment, the identity of the user who published the target comment and the identity of the object into a comment card template to obtain the comment card.

According to one or more embodiments, the first application is a short video application, the object is a short video, and the identity of the object is the cover of the short video.

According to one or more embodiments, the sharing interface also includes an input box.

The processing module 804 is further configured to, in response to a user inputting information in the input box, add the information in the input box to the information about the target comment.

According to one or more embodiments, the sharing interface further includes a custom tag, which includes at least one of the following: a tag of the identity of the user that published the target comment, the tag of the identity of object, and the tag of the identity of the user to which the comment replied by the target comment belongs.

The processing module 804 is further configured to determine the contents in the information about the target comment in response to the user's operation on the custom tag.

According to one or more embodiments, the display module 802 is further configured to display the object, display a comment area for the object in response to the user's request for the comment area for the object, and display an operation list in response to detecting a preset operation by the user on the target comment in the comment area, wherein the operation list includes controls for at least one operation on the target comment, and the controls include a sharing control.

According to one or more embodiments, the preset operation is long press or double click.

The comment sharing apparatus according to embodiments of the present disclosure can be employed to implement the technical solutions of the above method embodiments, and their implementation principles and technical effects are similar, so will not be repeated here.

In order to realize the above embodiments, the embodiments of the present disclosure also provide an electronic device.

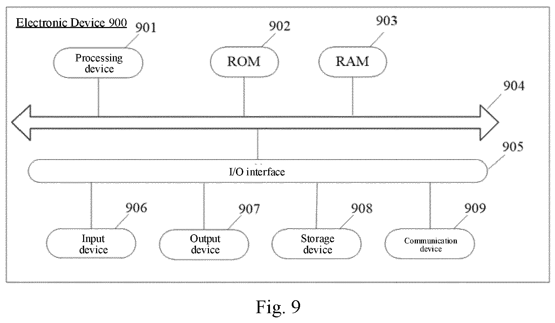

Referring to Fig. 9, there is illustrated a schematic structural diagram of an electronic device applicable to the embodiments of the present disclosure, and the electronic device 900 can be the electronic device in the above embodiments. The electronic device shown in Fig. 9 is only an example, and should not impose any restriction on the functions and application scopes of the embodiments of the present disclosure.

As shown in Fig. 9, the electronic device 900 can include a processing apparatus (such as a central processing unit, a graphics processor, etc.) 901, which can perform various appropriate actions and processes according to a program stored in a Read Only Memory (ROM) 902 or a program loaded into a Random Access Memory (RAM) 903 from a storage device 908. In the RAM 903, various programs and data required for the operation of the electronic device 900 are also stored. The processing device 901, ROM 902 and RAM 903 are connected to each other through a bus 904. An input/output (I/O) interface 905 is also connected to the bus 904.

Generally, the following devices can be connected to the I/O interface 905: an input device 906 including, for example, touch screen, touch pad, keyboard, mouse, camera, microphone, accelerometer, gyroscope, etc.; an output device 907 such as Liquid Crystal Display (LCD), speakers, vibrators, etc.; a storage device 908 including a magnetic tape, a hard disk, etc.; and a communication device 909. The communication device 909 may allow the electronic device 900 to communicate with other devices wirelessly or in wired so as to exchange data. Although Fig. 9 shows an electronic device 900 with various devices, it should be understood that it is not required to implement or have all the devices shown. More or fewer devices may alternatively be implemented or provided.

Particularly, according to embodiments of the present disclosure, the process described above with reference to the flowchart can be implemented as a computer software program. For example, an embodiment of the present disclosure includes a computer program product including a computer program carried on a computer readable medium, the computer program containing program code for executing the method shown in the flowchart. In such an embodiment, the computer program can be downloaded and installed from the network through the communication device 909, or installed from the storage device 908 or from the ROM 902. When executed by the processing device 901, the computer program carries out the above-mentioned functions defined in the method of the embodiment of the present disclosure.

It should be noted that the above-mentioned computer-readable medium in this disclosure can be a computer-readable signal medium or a computer-readable storage medium or any combination of the two. The computer-readable storage medium can be, for example, but not limited to, an electrical, magnetic, optical, electromagnetic, infrared, or semiconductor system, device or equipment, or any combination of the above. More specific examples of computer-readable storage media may include, but not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium can be any tangible medium that contains or stores a program that can be used by or in combination with an instruction execution system, device, or equipment. In this disclosure, the computer-readable signal medium may include a data signal propagated in baseband or as a part of a carrier wave, in which computer-readable program code is carried. This propagated data signal can take many forms, including, but not limited to, electromagnetic signals, optical signals, or any suitable combination of the above. The computer-readable signal medium can also be any computer-readable medium other than the computer-readable storage medium, which can send, propagate, or transmit the program for use by or in connection with the instruction execution system, apparatus, or device. The program code contained in the computer-readable medium can be transmitted by any suitable medium, including but not limited to: electric wire, optical cable, RF (radio frequency), etc., or any suitable combination of the above.

The computer-readable medium may be included in the electronic device; or it can exist alone without being loaded into the electronic device.

The above-mentioned computer-readable medium carries one or more programs, which, when executed by the electronic device, cause the electronic device to execute the method shown in the above-mentioned embodiments.

Computer program codes for performing the operations of the present disclosure can be written in one or more programming languages or a combination thereof, including object-oriented programming languages such as Java, Smalltalk, and C++, as well as conventional procedural programming languages such as "C" language or similar programming languages. The program codes can be completely executed on the user's computer, partially executed on the user's computer, executed as an independent software package, partially executed on the user's computer, and partially executed on the remote computer, or completely executed on the remote computer or server. In a case related to remote computers, the remote computers can be connected to the user computers through any kind of networks, including Local Area Network (LAN) or Wide Area Network (WAN), or can be connected to external computers (for example, through the Internet with Internet service providers).

The flowcharts and block diagrams in the drawings illustrate the architecture, functions, and operations of possible embodiments of systems, methods, and computer program products according to various embodiments of the present disclosure. In this regard, each block in the flowchart or block diagram may represent a module, a program segment, or a part of the code, which contains one or more executable instructions for implementing specified logical functions. It should also be noted that in some alternative implementations, the functions labeled in the blocks may also occur in a different order than those labeled in the drawings. For example, two blocks shown in succession can actually be executed substantially in parallel, and sometimes they can be executed in the reverse order, depending on the functions involved. It should also be noted that each block in the block diagram and/or flowchart, and the combination of blocks in the block diagram and/or flowchart, can be realized by a dedicated hardware-based system that performs specified functions or operations, or can be realized by a combination of dedicated hardware and computer instructions.

The modules described in the embodiments of this disclosure can be realized by software or hardware. In some cases, the name of the module does not limit the module itself. For example, the first acquisition module can also be described as "a module that acquires at least two Internet protocol addresses".

The functions described above herein can be at least partially performed by one or more hardware logic components. For example, without limitation, exemplary types of hardware logic components that can be used include: field programmable gate array (FPGA), application specific integrated circuit (ASIC), application specific standard product (ASSP), system on chip (SOC), complex programmable logic device (CPLD) and so on.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. The machine-readable medium may include, but not limited to, electronic, magnetic, optical, electromagnetic, infrared, or semiconductor systems, devices or equipment, or any suitable combination of the foregoing. More specific examples of machine-readable storage medium may include electrical connections based on one or more wires, portable computer disks, hard disks, random access memories (RAM), read-only memories (ROM), erasable programmable read-only memories (EPROM or flash memories), optical fibers, compact disk read-only memories (CD-ROMs), optical storage devices, magnetic storage devices, or any suitable combination of the above.

In a first aspect, according to one or more embodiments of the present disclosure, there is provided a comment sharing method, including: receiving a sharing request from a user for a target comment, wherein the target comment is a comment on an object in a first application; displaying a sharing interface, on which a first list of identities of users to be shared is included, wherein the users to be shared are users associated with logged-in users of the first application in the first application; in response to an operation by the user on the identity of a first target user in the first list, transmitting information about the target comment to a client of the first target user through the first application, and the information about the target comment includes contents of the target comment

According to one or more embodiments of the present disclosure, the method further includes, before displaying the interface, determining the users to be shared displayed in the first list and their display order according to the number of interactions or the time of last interaction between the logged-in user and the users to be shared; or, determining the users to be shared displayed in the first list and their display order according to the attributes of the users to be shared.

According to one or more embodiments of the present disclosure, the first target user is at least one user.

According to one or more embodiments of the present disclosure, the sharing interface also includes identity of at least one second application to be shared.

According to one or more embodiments of the present disclosure, the method further includes, in response to the user's operation on the identity of a target second application among the identities of at least one second application, displaying the identities of users to be shared in the target second application, wherein the users to be shared in the target second application are users associated with logged-in users of the target second application in the target second application; in response to the user's operation on an identity of a second target user among the identities of users to be shared in the target second application, transmitting the information about the target comment to a client of the second target user through the target second application.

According to one or more embodiments of the present disclosure, the method further includes displaying a second list in response to the user's search operation, wherein the second list includes identities of all users associated with the search operation; in response to the user's operation on an identity of a third target user in the second list, transmitting the information about the target comment to a client of the third target user through the first application.

According to one or more embodiments of the present disclosure, the information about the target comment further includes at least one of the following: identity of a user who published the target comment, identity of the object, and identity of a user to which a comment replied by the target comment belongs to.

According to one or more embodiments of the present disclosure, the information about the target comment is a comment card.

According to one or more embodiments of the present disclosure, the method further includes: before transmitting information about the target comment to a client of the first target user through the first application, generating the comment card.

According to one or more embodiments of the present disclosure, the comment card includes contents of the target comment, the identity of the user who published the target comment, and the identity of the object.

According to one or more embodiments of the present disclosure, the generating the comment card includes extracting the contents of the target comment and the identity of the user who published the target comment from the target comment; obtaining the identity of the object, and filling the contents of the target comment, the identity of the user who published the target comment and the identity of the object into a comment card template to obtain the comment card.

According to one or more embodiments of the present disclosure, the first application is a short video application, the object is a short video, and the identity of the object is the cover of the short video.

According to one or more embodiments of the present disclosure, the sharing interface also includes an input box; and the method further includes: before transmitting information about the target comment to a client of the first target user through the first application, in response to a user inputting information in the input box, adding the information in the input box to the information about the target comment.

According to one or more embodiments of the present disclosure, the sharing interface further includes a custom tag, which includes at least one of the following: a tag of the identity of the user that published the target comment, the tag of the identity of object, and the tag of the identity of the user to which the comment replied by the target comment belongs.

The method further includes: before transmitting information about the target comment to a client of the first target user through the first application, determining the contents in the information about the target comment in response to the user's operation on the custom tag.

According to one or more embodiments of the present disclosure, the method further includes: before receiving a sharing request from a user for a target comment, displaying the object; displaying a comment area for the object in response to the user's request for the comment area for the object; and displaying an operation list in response to detecting a preset operation by the user on the target comment in the comment area, wherein the operation list includes controls for at least one operation on the target comment, and the controls include a sharing control.

According to one or more embodiments, the preset operation is long press or double click.

In a second aspect, according to one or more embodiments of the present disclosure, there is provided a comment sharing apparatus, including:
a detection module configured to receive a sharing request from a user for a target comment, wherein the target comment is a comment on an object in a first application.
a displaying module configured to display a sharing interface, on which a first list of identities of users to be shared is included, wherein the users to be shared are users associated with logged-in users of the first application in the first application.
a transceiving module configured to, in response to an operation by the user on the identity of a first target user in the first list, transmit information about the target comment to a client of the first target user through the first application, and the information about the target comment includes contents of the target comment.

According to one or more embodiments, the processing module is configured to determine the users to be shared displayed in the first list and their display order according to the number of interactions or the time of last interaction between the logged-in user and the users to be shared; or, determine the users to be shared displayed in the first list and their display order according to the attributes of the users to be shared.

According to one or more embodiments, the first target user is at least one user.

According to one or more embodiments, the sharing interface also includes identity of at least one second application to be shared.

According to one or more embodiments, the display module is further configured to, in response to the user's operation on the identity of a target second application among the identities of at least one second application, display the identities of users to be shared in the target second application, wherein the users to be shared in the target second application are users associated with logged-in users of the target second application in the target second application.

The transceiving module is further configured to, in response to the user's operation on an identity of a second target user among the identities of users to be shared in the target second application, transmit the information about the target comment to a client of the second target user through the target second application.

According to one or more embodiments, the display module is further configured to display a second list in response to the user's search operation, wherein the second list includes identities of all users associated with the search operation.

The transceiving module is further configured to, in response to the user's operation on an identity of a third target user in the second list, transmit the information about the target comment to a client of the third target user through the first application.

According to one or more embodiments, the information about the target comment further includes at least one of the following: identity of a user who published the target comment, identity of the object, and identity of a user to which a comment replied by the target comment belongs to.

According to one or more embodiments, the information about the target comment is a comment card.

According to one or more embodiments, the processing module is further configured to generate the comment card.

According to one or more embodiments, the comment card includes contents of the target comment, the identity of the user who published the target comment, and the identity of the object.

According to one or more embodiments, the processing module is specifically configured to extract the contents of the target comment and the identity of the user who published the target comment from the target comment, obtain the identity of the object, and fill the contents of the target comment, the identity of the user who published the target comment and the identity of the object into a comment card template to obtain the comment card.

According to one or more embodiments, the first application is a short video application, the object is a short video, and the identity of the object is the cover of the short video.

According to one or more embodiments, the sharing interface also includes an input box.

The processing module is further configured to, in response to a user inputting information in the input box, add the information in the input box to the information about the target comment.

According to one or more embodiments, the sharing interface further includes a custom tag, which includes at least one of the following: a tag of the identity of the user that published the target comment, the tag of the identity of object, and the tag of the identity of the user to which the comment replied by the target comment belongs.

The processing module is further configured to determine the contents in the information about the target comment in response to the user's operation on the custom tag.

According to one or more embodiments, the display module is further configured to display the object, display a comment area for the object in response to the user's request for the comment area for the object, and display an operation list in response to detecting a preset operation by the user on the target comment in the comment area, wherein the operation list includes controls for at least one operation on the target comment, and the controls include a sharing control.

According to one or more embodiments, the preset operation is long press or double click.

In a third aspect, according to one or more embodiments, there is provided an electronic device, including a processor and a memory; the memory stores computer-executable instructions; the processor executes the computer-executable instructions stored in the memory, so that the processor executes the comment sharing method as described in the first aspect and various possible designs of the first aspect above.

In a fourth aspect, according to one or more embodiments, there is provided a computer-readable storage medium in which computer-executable instructions are stored, and the computer-executable instructions, when executed by a processor, cause implementation of the comment sharing method as described the first aspect and various possible designs of the first aspect above.

In a fifth aspect, according to one or more embodiments, there is provided a computer program product, including computer instructions, which, when executed by a processor, implement the comment sharing method as described the first aspect and various possible designs of the first aspect above.

In a sixth aspect, according to one or more embodiments, there is provided a computer program, which includes program codes that, when executed by a computer, cause implementation of the comment sharing method of the first aspect and various possible designs of the first aspect above.

The above description is only the preferred embodiment of the present disclosure and the explanation of the applied technical principles. Those skilled in the art should understand that the disclosure scope involved in this disclosure is not limited to the technical solution formed by the specific combination of the above technical features, but also covers other technical solutions formed by any combination of the above technical features or their equivalent features. For example, the above features can be mutually replaced with the technical features with similar functions disclosed in this disclosure.

Furthermore, although the operations are depicted in a particular order, this should not be understood as requiring these operations to be performed in the particular order shown or in sequential order. Under certain circumstances, multitasking and parallel processing may be beneficial.

Some features described in the context of separate embodiments can also be implemented in a single embodiment in combination. On the contrary, various features described in the context of a single embodiment can also be implemented in multiple embodiments individually or in any suitable sub-combination.

## Claims

1. A comment sharing method, comprising:
receiving (S201) a sharing request from a user for a target comment, wherein the target comment is a comment from at least one other user on an object in a first application;
displaying (S202) a sharing interface, on which a first list of identities of users to be shared is included, wherein the users to be shared are users associated with logged-in users of the first application in the first application, wherein the sharing interface further includes a custom tag, which includes at least one of the following: a tag of an identity of a user that published the target comment, a tag of an identity of object, or a tag of an identity of a user to which a comment replied by the target comment belongs;
determining information about the target comment to be shared in response to a selection by the user on the custom tag, wherein the information about the target comment comprises content of the target comment, and wherein the information about the target comment further comprises at least one of the identity of the user who published the target comment, the identity of the object, or the identity of the user to which a comment replied by the target comment belongs corresponding to the selected tag;
in response to an operation by the user on the identity of a first target user in the first list, transmitting (S203) the information about the target comment to a client of the first target user through the first application.

2. The method of claim 1, wherein the method further comprises, before displaying the sharing interface, determining the users to be shared displayed in the first list and their display order according to the number of interactions or the time of last interaction between the logged-in user and the users to be shared; or,
determining the users to be shared displayed in the first list and their display order according to the attributes of the users to be shared.

3. The method of claim 1, wherein, the sharing interface also comprises identity of at least one second application to be shared, and wherein, the method further comprises:
in response to the user's operation on the identity of a target second application among the identities of at least one second application, displaying the identities of users to be shared in the target second application, wherein the users to be shared in the target second application are users associated with logged-in users of the target second application in the target second application;
in response to the user's operation on an identity of a second target user among the identities of users to be shared in the target second application, transmitting the information about the target comment to a client of the second target user through the target second application.

4. The method of claim 1, wherein, the method further comprises:
displaying a second list in response to the user's search operation, wherein the second list comprises identities of all users associated with the search operation;
in response to the user's operation on an identity of a third target user in the second list, transmitting the information about the target comment to a client of the third target user through the first application.

5. The method of claim 1, wherein, the information about the target comment is a comment card, and wherein, the method further comprises:
before transmitting the information about the target comment to the client of the first target user through the first application, generating the comment card.

6. The method of claim 5, wherein, the comment card comprises the content of the target comment, the identity of the user who published the target comment, and the identity of the object.

7. The method of claim 5, wherein, the generating the comment card comprises:
extracting the content of the target comment and the identity of the user who published the target comment from the target comment;
obtaining the identity of the object, and
filling the content of the target comment, the identity of the user who published the target comment and the identity of the object into a comment card template to obtain the comment card.

8. The method of claim 4, wherein, the first application is a short video application, the object is a short video, and the identity of the object is the cover of the short video.

9. The method of any one of claims 1-8, wherein, the sharing interface also comprises an input box; and the method further comprises:
before transmitting the information about the target comment to the client of the first target user through the first application, in response to a user inputting information in the input box, adding the information in the input box to the information about the target comment.

10. The method of any one of claims 1-8, wherein, the method further comprises: before receiving a sharing request from a user for a target comment,
displaying the object;
displaying a comment area for the object in response to the user's request for the comment area for the object; and
displaying an operation list in response to detecting a preset operation by the user on the target comment in the comment area, wherein the operation list comprises controls for at least one operation on the target comment, and the controls comprise a sharing control.

11. An electronic device, comprising:
at least one processor and a memory;
the memory stores computer-executable instructions;
the at least one processor executes the computer-executable instructions stored in the memory, so that the at least one processor executes the method of any of claims 1-10.

12. A computer-readable storage medium, wherein, computer-executable instructions are stored in the computer-readable storage medium, and the computer-executable instructions, when executed by a processor, implement the method of any one of claims 1- 10.

13. A computer program product comprising computer instructions, wherein, the computer instructions, when executed by a processor, implement the method of any one of claims 1-10.

## Patentansprüche

1. Verfahren zur Kommentarfreigabe, umfassend:
Empfangen (S201) einer Freigabeanfrage eines Benutzers für einen Zielkommentar, wobei es sich bei dem Zielkommentar um einen Kommentar von mindestens einem anderen Benutzer zu einem Objekt in einer ersten Anwendung handelt;
Anzeigen (S202) einer Freigabeschnittstelle, auf der eine erste Liste von Identitäten von Benutzern enthalten ist, die freigegeben werden sollen, wobei es sich bei den freizugebenden Benutzern um Benutzer handelt, die angemeldeten Benutzern der ersten Anwendung in der ersten Anwendung zugeordnet sind, wobei die Freigabeschnittstelle weiter ein benutzerdefiniertes Tag enthält, das mindestens eines von Folgendem enthält: einen Tag einer Identität eines Benutzers, der den Zielkommentar veröffentlicht hat, einen Tag einer Identität eines Objekts oder einen Tag einer Identität eines Benutzers, zu dem ein Kommentar gehört, auf den der Zielkommentar geantwortet hat;
Bestimmen von Informationen über den Zielkommentar, der als Reaktion auf eine Auswahl durch den Benutzer am benutzerdefinierten Tag freigebenden werden sollen, wobei die Informationen über den Zielkommentar den Inhalt des Zielkommentars umfassen, und wobei die Informationen über den Zielkommentar weiter mindestens eines umfassen von der Identität des Benutzers, der den Zielkommentar veröffentlicht hat, der Identität des Objekts oder der Identität des Benutzers, zu dem ein Kommentar gehört, auf den der Zielkommentar geantwortet hat, der dem ausgewählten Tag entspricht;
als Reaktion auf eine Operation durch den Benutzer an der Identität eines ersten Zielbenutzers in der ersten Liste, Übertragen (S203) der Informationen über den Zielkommentar über die erste Anwendung an einen Client des ersten Zielbenutzers.

2. Verfahren nach Anspruch 1, wobei das Verfahren weiter vor Anzeigen der Freigabeschnittstelle Bestimmen der in der ersten Liste angezeigten freizugebenden Benutzer und ihrer Anzeigereihenfolge gemäß der Anzahl von Interaktionen oder dem Zeitpunkt der letzten Interaktion zwischen dem angemeldeten Benutzer und den freizugebenden Benutzern umfasst; oder
Bestimmen der in der ersten Liste angezeigten freizugebenden Benutzer und ihrer Anzeigereihenfolge gemäß den Attributen der freizugebenden Benutzer.

3. Verfahren nach Anspruch 1, wobei die Freigabeschnittstelle auch die Identität von mindestens einer zweiten freizugebenden Anwendung umfasst, und wobei das Verfahren weiter Folgendes umfasst:
als Reaktion auf die Aktion des Benutzers an der Identität einer zweiten Zielanwendung unter den Identitäten von mindestens einer zweiten Anwendung, Anzeigen der Identitäten der freizugebenden Benutzer in der zweiten Zielanwendung, wobei es sich bei den freizugebenden Benutzern in der zweiten Zielanwendung um Benutzer handelt, die angemeldeten Benutzern der zweiten Zielanwendung in der zweiten Zielanwendung zugeordnet sind;
als Reaktion auf die Aktion des Benutzers an der Identität eines zweiten Zielbenutzers unter den Identitäten von Benutzern, die in der zweiten Zielanwendung freigegeben werden sollen, Übertragen der Informationen über den Zielkommentar über die zweite Zielanwendung an einen Client des zweiten Zielbenutzers.

4. Verfahren nach Anspruch 1, wobei das Verfahren weiter Folgendes umfasst:
Anzeigen einer zweiten Liste als Reaktion auf eine Suchoperation des Benutzers, wobei die zweite Liste die Identitäten aller Benutzer umfasst, die der Suchoperation zugeordnet sind;
als Reaktion auf die Aktion des Benutzers an der Identität eines dritten Zielbenutzers in der zweiten Liste, Übertragen der Informationen über den Zielkommentar über die erste Anwendung an einen Client des dritten Zielbenutzers.

5. Verfahren nach Anspruch 1, wobei es sich bei den Informationen über den Zielkommentar um eine Kommentarkarte handelt, und wobei das Verfahren weiter Folgendes umfasst:
vor Übertragen der Informationen über den Zielkommentar an den Client des ersten Zielnutzers über die erste Anwendung, Erzeugen der Kommentarkarte.

6. Verfahren nach Anspruch 5, wobei die Kommentarkarte den Inhalt des Zielkommentars, die Identität des Benutzers, der den Zielkommentar veröffentlicht hat, und die Identität des Objekts umfasst.

7. Verfahren nach Anspruch 5, wobei das Erzeugen der Kommentarkarte Folgendes umfasst:
Extrahieren des Inhalts des Zielkommentars und der Identität des Benutzers, der den Zielkommentar veröffentlicht hat, aus dem Zielkommentar;
Erhalten der Identität des Objekts und
Ausfüllen des Inhalts des Zielkommentars, der Identität des Benutzers, der den Zielkommentar veröffentlicht hat, und der Identität des Objekts in einer Kommentarkartenvorlage, um die Kommentarkarte zu erhalten.

8. Verfahren nach Anspruch 4, wobei die erste Anwendung eine Kurzvideo-Anwendung ist, das Objekt ein Kurzvideo ist und die Identität des Objekts das Cover des Kurzvideos ist.

9. Verfahren nach einem der Ansprüche 1 - 8, wobei die Freigabeschnittstelle auch ein Eingabefeld umfasst; und das Verfahren weiter Folgendes umfasst:
vor Übertragen der Informationen über den Zielkommentar über die erste Anwendung an den Client des ersten Zielbenutzers, als Reaktion darauf, dass ein Benutzer Informationen in das Eingabefeld eingibt, Hinzufügen der Informationen aus dem Eingabefeld zu den Informationen über den Zielkommentar.

10. Verfahren nach einem der Ansprüche 1 - 8, wobei das Verfahren weiter Folgendes umfasst: vor Empfangen einer Freigabeanfrage von einem Benutzer für einen Zielkommentar,
Anzeigen des Objekts;
Anzeigen eines Kommentarbereichs für das Objekt als Reaktion auf die Anfrage des Benutzers für einen Kommentarbereich für das Objekt; und
Anzeigen einer Operationsliste als Reaktion auf Erkennen einer voreingestellten Operation des Benutzers im Kommentarbereich für den Zielkommentar, wobei die Operationsliste Steuerelemente für mindestens eine Operation am Zielkommentar umfasst und die Steuerelemente ein Freigabesteuerelement umfassen.

11. Elektronische Vorrichtung, umfassend:
mindestens einen Prozessor und einen Speicher;
wobei der Speicher computerausführbare Anweisungen speichert;
wobei mindestens ein Prozessor im Speicher gespeicherten computerausführbaren Anweisungen ausführt, sodass mindestens ein Prozessor das Verfahren nach einem der Ansprüche 1-10 ausführt.

12. Computerlesbares Speichermedium, wobei computerausführbare Anweisungen auf dem computerlesbaren Speichermedium gespeichert sind, und die computerausführbaren Anweisungen, wenn sie von einem Prozessor ausgeführt werden, das Verfahren nach einem der Ansprüche 1-10 implementieren.

13. Computerprogrammprodukt, das computerausführbare Anweisungen umfasst, wobei die computerausführbaren Anweisungen, wenn sie von einem Prozessor ausgeführt werden, das Verfahren nach einem der Ansprüche 1-10 implementieren.

## Revendications

1. Procédé de partage de commentaire, comprenant :
la réception (S201) d'une demande de partage d'un commentaire cible en provenance d'un utilisateur, dans lequel le commentaire cible est un commentaire d'au moins un autre utilisateur sur un objet dans une première application ;
l'affichage (S202) d'une interface de partage, sur laquelle est incluse une première liste d'identités d'utilisateurs à partager, dans lequel les utilisateurs à partager sont des utilisateurs associés à des utilisateurs connectés de la première application dans la première application, dans lequel l'interface de partage inclut en outre une étiquette personnalisée, qui inclut au moins l'un des éléments suivants : une étiquette d'une identité d'un utilisateur qui a publié le commentaire cible, une étiquette d'une identité d'un objet ou une étiquette d'une identité d'un utilisateur auquel appartient un commentaire auquel répond le commentaire cible ;
la détermination d'informations relatives au commentaire cible à partager en réponse à une sélection effectuée par l'utilisateur sur l'étiquette personnalisée, dans lequel les informations relatives au commentaire cible comprennent le contenu du commentaire cible, et dans lequel les informations relatives au commentaire cible comprennent en outre au moins l'une parmi l'identité de l'utilisateur qui a publié le commentaire cible, l'identité de l'objet ou l'identité de l'utilisateur auquel appartient un commentaire auquel répond le commentaire cible, correspondant à l'étiquette sélectionnée;
en réponse à une opération de l'utilisateur sur l'identité d'un premier utilisateur cible dans la première liste, la transmission (S203) des informations sur le commentaire cible à un client du premier utilisateur cible par l'intermédiaire de la première application.

2. Procédé selon la revendication 1, dans lequel le procédé comprend en outre, avant l'affichage de l'interface de partage, la détermination des utilisateurs à partager affichés dans la première liste et leur ordre d'affichage en fonction du nombre d'interactions ou de la date de la dernière interaction entre l'utilisateur connecté et les utilisateurs à partager ; ou,
la détermination des utilisateurs à partager affichés dans la première liste et leur ordre d'affichage en fonction des attributs des utilisateurs à partager.

3. Procédé selon la revendication 1, dans lequel l'interface de partage comprend également l'identité d'au moins une seconde application à partager, et dans lequel le procédé comprend en outre :
en réponse à l'opération de l'utilisateur sur l'identité d'une seconde application cible parmi les identités d'au moins une seconde application, l'affichage des identités des utilisateurs à partager dans la seconde application cible, dans lequel les utilisateurs à partager dans la seconde application cible sont des utilisateurs associés aux utilisateurs connectés de la seconde application cible dans la seconde application cible ;
en réponse à l'opération de l'utilisateur sur l'identité d'un deuxième utilisateur cible parmi les identités des utilisateurs à partager dans la seconde application cible, la transmission des informations concernant le commentaire cible à un client du deuxième utilisateur cible par l'intermédiaire de la seconde application cible.

4. Procédé selon la revendication 1, dans lequel le procédé comprend en outre :
l'affichage d'une seconde liste en réponse à une opération de recherche de l'utilisateur, dans lequel la seconde liste comprend les identités de tous les utilisateurs associés à l'opération de recherche ;
en réponse à l'opération de l'utilisateur sur une identité d'un troisième utilisateur cible dans la seconde liste, la transmission des informations concernant le commentaire cible à un client du troisième utilisateur cible par l'intermédiaire de la première application.

5. Procédé selon la revendication 1, dans lequel les informations relatives au commentaire cible sont une fiche de commentaire, et dans lequel le procédé comprend en outre :
avant de transmettre les informations relatives au commentaire cible au client du premier utilisateur cible par l'intermédiaire de la première application, la génération de la fiche de commentaire.

6. Procédé selon la revendication 5, dans lequel la fiche de commentaire comprend le contenu du commentaire cible, l'identité de l'utilisateur qui a publié le commentaire cible et l'identité de l'objet.

7. Procédé selon la revendication 5, dans lequel la génération de la fiche de commentaire comprend :
l'extraction du contenu du commentaire cible et de l'identité de l'utilisateur qui a publié le commentaire cible à partir du commentaire cible ;
l'obtention de l'identité de l'objet, et
le remplissage du contenu du commentaire cible, de l'identité de l'utilisateur qui a publié le commentaire cible et de l'identité de l'objet dans un modèle de fiche de commentaire pour obtenir la fiche de commentaire.

8. Procédé selon la revendication 4, dans lequel la première application est une application vidéo courte, l'objet est une vidéo courte et l'identité de l'objet est la vignette de la vidéo courte.

9. Procédé selon l'une quelconque des revendications 1-8, dans lequel l'interface de partage comprend également une zone de saisie ; et le procédé comprend en outre :
avant de transmettre les informations relatives au commentaire cible au client du premier utilisateur cible par l'intermédiaire de la première application, en réponse à la saisie d'informations par un utilisateur dans la zone de saisie, l'ajout des informations de la zone de saisie aux informations relatives au commentaire cible.

10. Procédé selon l'une quelconque des revendications 1-8, dans lequel le procédé comprend en outre : avant de recevoir une demande de partage d'un commentaire cible en provenance d'un utilisateur,
l'affichage de l'objet ;
l'affichage d'une zone de commentaire pour l'objet en réponse à la demande de l'utilisateur concernant la zone de commentaire pour l'objet ; et
l'affichage d'une liste d'opérations en réponse à la détection d'une opération prédéfinie par l'utilisateur sur le commentaire cible dans la zone de commentaire, dans lequel la liste d'opérations comprend des commandes pour au moins une opération sur le commentaire cible, et les commandes comprennent une commande de partage.

11. Dispositif électronique, comprenant :
au moins un processeur et une mémoire ;
la mémoire stocke des instructions exécutables par ordinateur ;
le au moins un processeur exécute les instructions exécutables par ordinateur stockées dans la mémoire, de sorte que le au moins un processeur exécute le procédé selon l'une quelconque des revendications 1-10.

12. Support de stockage lisible par ordinateur, dans lequel, des instructions exécutables par ordinateur sont stockées dans le support de stockage lisible par ordinateur, et les instructions exécutables par ordinateur, lorsqu'elles sont exécutées par un processeur, mettent en œuvre le procédé selon l'une quelconque des revendications 1-10.

13. Produit de programme informatique comprenant des instructions d'ordinateur, dans lequel, les instructions d'ordinateur, lorsqu'elles sont exécutées par un processeur, mettent en œuvre le procédé selon l'une quelconque des revendications 1-10.
